# EUROPEAN PATENT APPLICATION

(11) **EP 1 517 270 A2**
(43) Date of publication of application: **23.03.2005**
(21) Application number: 04021808.3
(22) Date of filing: 14.09.2004
(51) Int. Cl.: G06T 11/60

(54) **Apparatus, method, program and program storage medium for data editing and recording**

(30) Priority: 18.09.2003 JP 2003325399
(71) Applicant: Pioneer Corporation, Tokyo-to (JP)
(72) Inventor: Hosoi, Masayuki, c/o Pioneer Corporation, Tsurugashima-shi, Saitama-ken (JP); Kawaguchi, Tomoyuki, c/o Pioneer Corporation, Tsurugashima-shi, Saitama-ken (JP)
(74) Representative: Tappe, Hartmut

(57) **Abstract**

An editing system (100) is provided with a video-recording control unit (103) for recording an inputted content data in a HD (10) and an edited image control unit (108) for generating an operation screen necessary for editing when the content data is edited, and when the content data is edited, the edited content data is stored in the HD (10) in relation to image and audio data used when the content data is edited.

## Description

### BACKGROUND OF THE INVENTION

### 1. Field of the Invention

The present invention relates to a data editing and recording device for recording an image data together with an editing history information of the image data when a content data is edited.

### 2. Related Art

Recently, users have often photographed scenes and persons as digital images whether they are moving images or still images due to the development of small digital cameras and digital video cameras. In addition, since digitized images can be more easily managed than conventional analog images, users have recently had more chances of editing the images photographed by them.

In a conventional technology, some of such image editing devices can preserve edited image data together with information on the editing history of the edited image data. In particular, some editing devices that preserve original image data before being edited as well as image data after edited together with the information on editing history that shows the content of edition when the content data is edited and when the edited content data is preserved have recently been known.

The image editing device that preserves the original image data includes a registering unit for registering original images to be edited and the same images as the original images or images obtained by performing edition on the original images such as copying, when the images are edited, and an editing history preserving unit for preserving the editing history when the edited images are preserved after editing images such that the items of the contents of the editing history can be deleted and that the order of the items can be changed. (reference: Japanese Unexamined Patent Application Publication No. 2001-209818.)

However, in the above-described image editing device, when the editing history increases, it is not possible to easily specify the edited images by simply marking the images with characters. In particular, when a user is poor at editing, the working efficiency of editing work itself deteriorates.

### SUMMARY OF THE INVENTION

The present invention is designed to solve the above problems, and it is an obj ect of the present invention to provide a data editing and recording device capable of reducing or mitigating mistakes in editing operations and of effectively performing the editing operations.

The above object of the present invention can be achieved by a data editing and recording apparatus. The data editing and recording apparatus is provided with: an editing device which edits a content data having at least one of an audio data and an image data; a notifying device which notifies the content of an editing operation for the content data to a user when the content data is edited; and a storage device in which the edited content data and a notification data used when the content of the editing operation is notified to a user by the notifying device are stored so as to be related to each other.

According to the present invention, since the notification data, such as the image data and the audio data that represent the edited content, can be stored in a HD (Hard Disc) together with the edited content data, when a user reads out the previously edited content data from the HD, the user can read out the edited image data stored in relation to the content data and output the edited image data to a monitor through a screen display control unit. In addition, at this time, a reproduction control unit can read out the audio data stored in relation to the content data, perform a predetermined process on the audio data, and output the audio data from a monitor speaker. Thus, since the data editing and recording apparatus visually or aurally can confirm the edited content during the editing operation, it is possible to reduce or mitigate mistakes in the editing operation and to effectively perform the editing operation.

In one aspect of the present invention can be achieved by the data editing and recording apparatus of the present invention. The data editing and recording apparatus of the present invention is, wherein, when editing items that represent the content of a plurality of editing operations are continuously executed, the notification data related to at least one of the plurality of the editing items is stored in the storage device in relation to the edited content data.

According to the present invention, since it is possible to reduce the amount of the stored edited image data that represents the edited content, it is possible to effectively use the HD.

In another aspect of the present invention can be achieved by the data editing and recording apparatus of the present invention. The data editing and recording apparatus of the present invention is further provided with: an operation input device which is used for the editing operation and to which a command of the editing operation is inputted; a detecting device which detects the command for the editing operation inputted to the operation input device, during the editing of the content data by the editing device; and a control device which controls whether the notification data related to the editing operation is stored in the storage device, based on the input of the command for the editing operation detected by the detecting device, during at least one editing operation.

According to the present invention, in the case in which the input of the command for the editing operation cannot be detected within a fixedperiodof time after the final operation is inputted, the notification data related to the editing items that have already been edited is not stored in the HD. Thus it is possible to reduce the amount of the stored edited image data that represents the edited content without carelessly storing the edited data.

In further aspect of the present invention can be achieved by the data editing and recording apparatus of the present invention. The data editing and recording apparatus of the present invention is further provided with: a generating device which generates an image data that represents the content of the editing operation when the notifying device gives a notification using an image, wherein the notifying device gives the notification using the generated image data, and the generated image data is stored in the storage device as the notification data in relation to the content data.

According to the present invention, since the image data can be stored as the notification data, when a user reads out the content data edited in advance from the HD, the user can read out the edited image data stored in relation to the content data and output the edited image data to the monitor through a screen display control unit. Thus, since the data editing and recording apparatus can visually confirmthe edited content during the editing operation, it is possible to reduce or mitigate mistakes in the editing operation and to effectively perform the editing operation.

In further aspect of the present invention can be achieved by the data editing and recording apparatus of the present invention. The data editing and recording apparatus of the present invention is further provided with a storage device which stores the audio data in advance that represents the content of the editing operation when the notifying device gives a notification using a sound, wherein the audio data that represents the content of the editing operation by the editing device is stored in the storage device as the notification data in relation to the content data.

According to the present invention, since the audio data can be stored as the notification data, when a user reads out the previously edited content data from the HD, the user can read out the audio data stored in relation to the content data and output the audio data to a monitor speaker. Thus, since the data editing and recording apparatus according to the present invention can aurally confirm the edited content during the editing operation, it is possible to reduce or mitigate mistakes in the editing operation and to effectively perform the editing operation.

In further aspect of the present invention can be achieved by the data editing and recording apparatus of the present invention. The data editing and recording apparatus of the present invention is, wherein history information related to the editing of the content data is stored in the storage device in relation to the content data and the notification data.

According to the present invention, when a user reads out the previously edited content data from the HD 10, the user can read out the history information that indicates the editing history and output the history information to the monitor speaker. Thus, since data editing and recording apparatus of the present invention can visually or aurally confirm the edited content during the editing operation and also confirm the editing history of the edited content data, it is possible to reduce or mitigate mistakes in the editing operation and to effectively perform the editing operation.

### BRIEF DESCRIPTION OF THE DRAWINGS

FIG. 1 is a block diagram illustrating the system structure of an editing system according to a first embodiment of the present invention;
FIG. 2 is an example of the structure of a database of the present embodiment for recording a series of video data to be edited;
FIG. 3 is an example of edited image data when the content data is edited in the first embodiment;
FIG. 4 is a flow chart illustrating the operation of the recording process of the edited content data in the first embodiment;
FIG. 5 is a block diagram illustrating the system structure of an editing system according to a second embodiment of the present invention; and
FIG. 6 is a flow chart illustrating the recording processing operation of the edited audio data in the second embodiment.

### DESCRIPTION OF THE PREFERRED EMBODIMENTS

Embodiments of the present invention will now be described with reference to the drawings.

In addition, the respective embodiments to be described below are embodiments in which an editing history recording device of the present invention is applied to an editing system.

### [First embodiment]

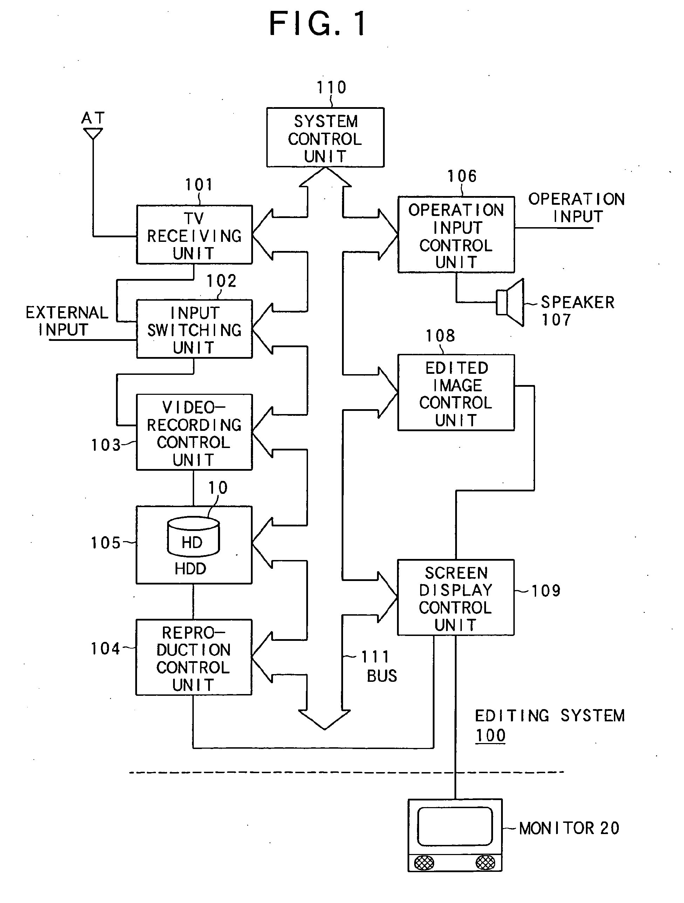

To begin with, a first embodiment of the editing system will be described with reference to FIGS. 1 to 4.

In the editing system of the present embodiment, when a content data is edited, the edited content data is connected with an image data and an audio (operation sound) data used when the content data is edited, and the relationship therebetween is stored in a hard disk.

First, the structure of the editing system according the present embodiment will be described with reference to FIGS. 1 to 3.

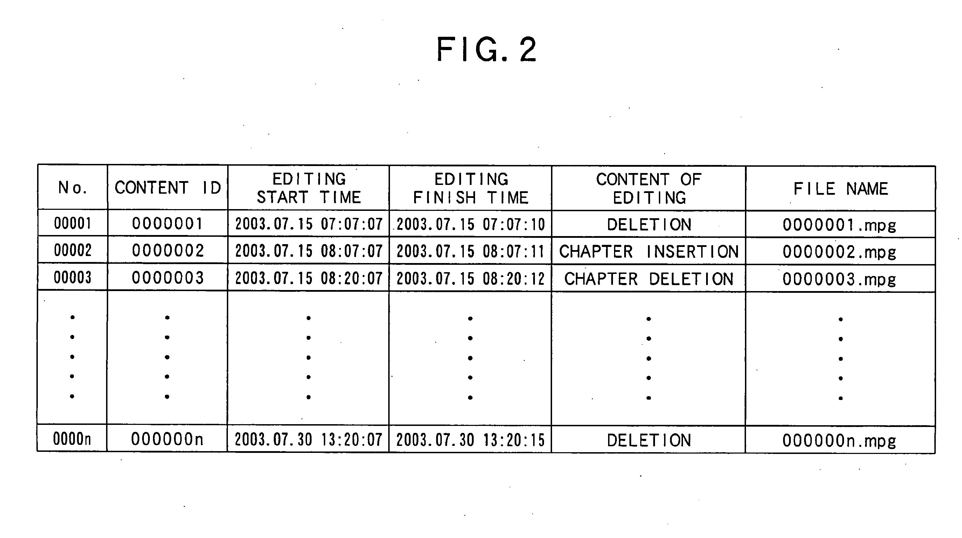

FIG. 1 is a block diagram illustrating the system structure of the editing system according to the present embodiment, and FIG. 2 is a table illustrating an example of the structure of a database of the present embodiment in which a series of edited video data are recorded.

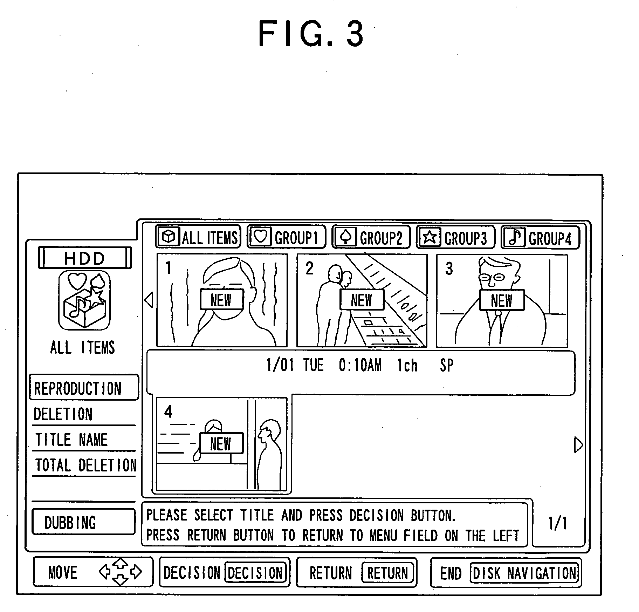

Further, FIG. 3 is a view illustrating an example of edited image data when the content data is edited in the present embodiment.

As shown in FIG. 1, an editing system 100 of the present embodiment comprises a TV receiving unit 101 for receiving broadcast waves transmitted from the respective broadcasting stations via an antenna AT; an input switching unit 102 to which video signals and audio signals related to the video signals outputted from the TV receiving unit 101, and analog video and audio signals inputted externally are inputted, and which selectively switches the input video signal and audio signals; a video-recording control unit 103 for converting the video and audio signals supplied via the input switching unit 102 into a video data and an audio data (hereinafter, a combination of the video data and the audio data to be referred to as a content data), to record the converted video and audio data in a hard disk (hereinafter, referred to as an HD) 10; a reproduction control unit 104 for reproducing the content data stored in the HD 10; a hard disk drive (hereinafter, referred to as an HDD) 105 that has the HD 10 for recording the content data, edited content data, and data related to the edited content data, and that performs the control of the read-out or the writing of the respective data items from or in the HD 10; an operation input control unit 106 for receiving an operation command related to the editing system 100 inputted via an operation unit or a remote controller (not shown) ; a speaker 107 for outputting an operation sound related to the editing operation for the content data outputted from the operation input control unit 106 when the content data is edited; a screen display control unit 109 for performing a display control on the video data to be displayed on a monitor 20 when the content data is displayed on the monitor 20 or when the respective data items are edited; an edited image control unit 108 for generating an operation screen necessary for editing when the content data is edited; and a system control unit 110 for performing image and sound editing on the content data stored in the HD 10, and for controlling the respective units related to the editing system 100. The respective units are connected to each other by means of a bus 111.

In addition, for example, the video-recording control unit 103 of the present embodiment constitutes storage control means according to the present invention, and the HD 10 constitutes storage means according to the present invention. Further, for example, the operation input control unit 106 of the present embodiment constitutes operation input means, detecting means, and storage means of the present invention, and the edited image control unit 108 constitutes generating means of the present invention.
Moreover, for example, the system control unit 110 of the present embodiment constitutes editing means, control means, and notification control means of the present invention.

The TV receiving unit 101 receives broadcast waves, for example, VHF or RF signals such as BS, transmitted from respective broadcasting stations via the antenna AT, tunes the received broadcast waves to a reception band selected by the operation unit (not shown), converts the signal waves received by the tuning into IF (intermediate frequency) signals, and demodulates the converted intermediate frequency signals to video and audio signals for TV.

Further, the TV receiving unit 101 decodes the demodulated video signals for TV and audio signals for TV to video and audio signals, and outputs the decoded video and audio signals to the input switching unit 102.

The video and audio signals outputted from the TV receiving unit 101 and analog video and audio signals externally inputted are inputted to the input switching unit 102. The input switching unit 102 selectively switches the input video and audio signals based on the control of the system control unit 110, and outputs the selected video and audio signals to the video-recording control unit 103.

The video and audio signals outputted from the input switching unit 102 are inputted to the video-recording control unit 103. The video-recording control unit 103 converts the inputted respective video and audio signals into digital signals, and converts the digitized video signals and audio signals to predetermined formats.

For example, in the present embodiment, the video-recording control unit 103 converts the digitized video signal to an MPEG (Motion Picture Expert Group) format, and converts the digitized audio signal to an AC-3 (Audio Coding) format.

Further, the video-recording control unit 103 generates a program stream composed of the video data in the MPEG format and the audio data in the AC-3 format, and outputs the generated program stream to the HDD 105.

In addition, the video-recording control unit 103 can output the video data in the MPEG format and the audio data in the AC-3 format to the screen display control unit 109 as output signals for the monitor 20.

On the other hand, when the content data is edited, the content data having the video and audio data edited in the system control unit 110, the image data on an operation screen outputted from the edited image control unit 108, and the audio data of the operation sound related to the operation outputted from the operation input control unit 106 at that moment are inputted to the video-recording control unit 103.

In a manner similar to the above description, the video-recording control unit 103 converts the video data related to the inputted content data to the MPEG format, and converts the audio data related to the input content data to the AC-3 format. In addition, the video-recording control unit 103 generates a program stream from the edited and converted content data, and then outputs the generated program stream to the HDD 105.

Further, when the video-recording control unit 103 edits the content data, it generates information (hereinafter, referred to as editing history information) related to the editing, based on the inputted image data for an operation screen and the audio data of the operation sound, and by correlating the information to the program stream described above, outputs the editing history information to the HDD 105.

Specifically, as shown in FIG. 2, the video-recording control unit 103 generates a content ID number referred to every content data whenever a series of video data on which an editing task has been performed is recorded in the HD 10, time information that shows the editing start time and the editing finish time in the series of the content data on which the editing task has been performed, and editing content information that shows the editing content. Then, the video-recording control unit 103 correlates the image data outputted from the edited image control unit 108 and the audio data outputted from the operation input control unit 106 with the program stream of the edited content data, and outputs the correlated information to the HDD 105 so as to construct a database.

Further, the video-recording control unit 103 converts the image data outputted from the edited image control unit 108 to the MPEG format, converts the audio data outputted from the operation input control unit 106 to the AC-3 format, and, after giving a predetermined file name to the converted image and audio data, outputs them to the HDD 105.

In addition, for example, insertion or deletion of chapters that indicates delimiters of a series of video data, deletion or manipulation of the series of video data, and insertion or manipulation of audio data, such as a voice, are included in the editing content information. The file names of the image data and audio data outputted from the edited image control unit 108 and the operation input control unit 106 are predetermined by the system control unit 106.

Further, the operation of a recording process for the edited content data including the editing history information will be described below.

The reproduction control unit 104 extracts the audio and video data outputted from the HDD 105 from the program stream, and decodes the extracted video and audio data to output the decoded audio and video data to the system control unit 110, the edited image control unit 108, and the screen display control unit 109.

Furthermore, when the data stored in the database constructed in the HD 10 is displayed on the monitor 20, the reproduction control unit 104 reads the respective data items from the database via the HDD 105, and outputs the respective data items to the screen display control unit 109.

In particular, as described above, when the reproduction control unit 104 according to the present embodiment reads out the content data edited and stored in advance in the HD 10 for reproduction or preparation of reproduction, it reads out the edited image data stored in relation to the content data together with the history information of the content data, and outputs them to the monitor 20 through the image display control unit 109.

In addition, at this time, the reproduction control unit 104 reads out the audio data stored in relation to the content data, and performs a predetermined process to output the audio data from a speaker installed in the monitor 20.

The HDD 105 records the content data, the edited content data, and the editing history information on the edited content data in the HD 10, and constructs a database in the HDD 105 by using the content data, the edited content data, and the editing history information while controlling the reading or writing of data from or in the HD 10.

To be specific, the program stream generated by the video-recording control unit 103 is inputted to the HDD 105, and the HD 105 records the inputted program stream in the HD 10, reads out the previously recorded program stream from the HD 10, and then outputs it to the reproduction control unit 104.

When the program stream and the editing history information, which are the content data, are inputted to the HDD 105 through the video-recording control unit 103, the HDD 105 constructs the above-described database in a region predetermined in the HD 10 and stores the program stream and the editing history information in the region.

A predetermined signal, which represents the command from a user, is inputted to the operation input control unit 106 through an external remote controller (not shown) or an operating unit (not shown), and then the operation input control unit 106 converts the input signal into an operation command and outputs it to the system control unit 110.

In addition, when the content data is edited, the operation input control unit 106 outputs the operation sound related to the editing of the content data to the outside through a sound processing unit and the speaker 107, and at the same time to the video-recording control unit 103 as an audio data.

Furthermore, when a plurality of content data items are edited, the operation input control unit 106 according to the present embodiment outputs the operation sound at the initial stage of the edition or the operation sound indicating the content edited at the final stage to the video-recording control unit 103 as an audio data.

Further, the operation input control unit 106 detects the command input for an editing operation by the operation unit (not shown) while the edited image control unit 108 is editing the content data. If the command input for the editing operation by the operation unit (not shown) is not detected for a fixed period of time during the editing operation, the operation input control unit 106 outputs this status to the system control unit 110.

For example, in the case in which an editing operation is performed on a plurality of editing items, when the command input for the editing operation is not detected for a fixed period of time after the final operation is inputted during the editing operation, the operation input control unit 106 according to the present embodiment outputs this status to the system control unit 110.

Further, when the command input by the operation unit is not detected for a fixed period of time during an editing operation, as described later, the edited image control unit 108 stops generating image data during the editing operation or abandons the image data generated in advance based on the control of the system control unit 110, and stops storing the image data related to the editing operation in the HD 10.

The image data or the audio data outputted from the video-recording control unit 103 and the image data or the audio data outputted from the reproducing control unit 104 are inputted to the screen display control unit 109, and the screen display control unit 109 generates a display data to be displayed on the monitor 20 based on the inputted image and audio data.

To be specific, the screen display control unit 109 temporarily preserves the inputted image or audio data in a buffer memory provided therein, reads out the display data from the buffer memory at a predetermined timing, outputs the display data to the monitor 20, and outputs a sound from the monitor speaker provided on the front surface thereof.

When the content data is edited based on the command of the operation input control unit 106, the edited image control unit 108 generates the image data (hereinafter, referred to as an edited image data) that represents the edited content displayed on the monitor 20 and outputs the generated edited image data to the video-recording control unit 103.

For example, when chapters are given to a plurality of content data items stored in advance in the HD 10 and when the content data items are edited by the given chapters, as illustrated in FIG. 3, the edited image control unit 108 generates the edited image data during the editing operation of the content data and outputs the generated image data to the screen display control unit 109 and to the video-recording control unit 103.

According to the present embodiment, the edited image control unit 108, in principle, outputs the edited image data outputted to the monitor 20 to the video-recording control unit 103 during the editing operation of the content data. However, when the content data is edited in real time or when a plurality of editing operations are performed, the edited image control unit 108 outputs the edited image data for a fixed period of time at the initial state of the editing operation or the image data for a fixed period of time when the editing operation is completed to the video-recording control unit 103.

In this case, when a fixed period of time has passed from the initial stage during the editing operation of the content data, the edited image control unit 108 stores the edited image data generated at that time in a memory therein and outputs the stored edited image data to the video-recording control unit 103 when the editing operation of the content data is completed.

Furthermore, according to the present embodiment, the edited image control unit 108 may output the edited image data not only for a fixed period of time from the start of the editing or from the finish of the editing , but of course for a fixed period of time from an arbitrary time during the editing operation to the video-recording control unit 103, or may output a certain edited image data of the edited image data that indicates a representative part of the editing items to the video-recording control unit 103.

In addition, when the status that the input of the command of the operation unit (not shown) is not detected by the operation input control unit 106 for a fixed period of time is inputted during an editing operation, as described above, the edited image control unit 108 does not generate the edited image data of the image data of the editing operation or abandons the image data generated previously such that the edited image control unit 108 stops storing the image data related to the editing operation in the HD 10.

The system control unit 110 mainly composed of a central processing unit (CPU) controls an overall function related to the editing operation of the content data based on the command of a user, which is inputted through the operation input control unit 106.

In addition, the system control unit 110 controls the video-recording control unit 103 and the reproduction control unit 104 to read out the content data recorded in the HD 10, to perform the manipulation of the content data, such as addition, deletion, and composition of the image and audio data, addition and deletion of chapters, and deletion and rearrangement of a part of the content data, to perform image and audio edition on the content data stored in the HD 10, and to output the edited content data to the monitor 20 through the reproduction control unit 104.

Furthermore, when the content data is edited, the system control unit 110 arranges for the edited image control unit 108 and the operation input control unit 106 to output the image data during the operation or a sound determined for each edited content to the video-recording control unit 103 as a data, based on the operation command outputted from the operation input control unit 106, such that the system control unit 110 generates the editing history information via the video-recording control unit 103 and records the editing history information in the HD 10, based on the respective data items, in addition to the edited content data, as described above.

In particular, when the editing history information at the editing start time and the editing finish time is generated by the video-recording control unit 103, the system control unit 110 outputs the editing start time and the editing finish time generated by the timer installed therein to the video-recording control unit 103.

As described above, according to the present embodiment, since the image data and the audio data that represent the edited content can be stored in the HD 10 together with the edited content data, when a user reads out the content data which is stored in the HD 10 and edited in advance, the user can read out the edited image data stored in relation to the content data together with the editing history information included in the content data to output the edited image data to the monitor 20 through the screen display control unit 109.

In addition, at this time, the reproducing control unit 104 reads out the audio data stored in relation to the content data, performs a predetermined process on the audio data, and outputs the audio data from the speaker 107.

Thus, since the editing system 100 according to the present embodiment can visually or aurally confirm the edited contents during the editing operation, it is possible to reduce or mitigate mistakes in the editing operation and to effectively perform the editing operation.

In addition, a detailed operation of the recording process of the edited content data including the editing history information will be described later.

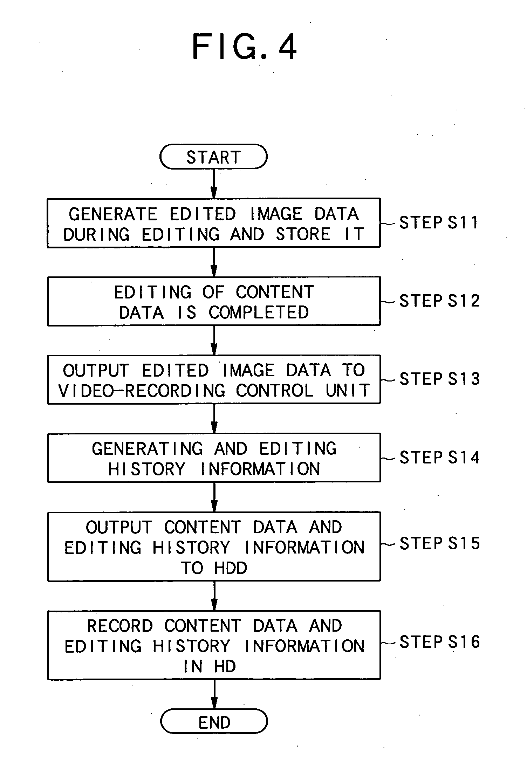

Next, the operation of the recording process of the edited content data, which is performed by the system control unit according to the present embodiment, will be described with reference to FIG. 4.

Furthermore, FIG. 4 is a flow chart illustrating the operation of the recording process of the edited content data.

In addition, according to the operation, when the content data is stored in the HD 10 in advance and also the editing operation of the content data, such as the addition of chapters, is performed in advance, and when a plurality of editing items are performed, the edited image data items at the initial stage of the editing operation or of the representative part of the editing items are stored in the HD 10.

First, the system control unit 110 controls the editing image control unit 108 to generate the edited image data that shows the content of the editing operation of the content data during the editing operation of the content data and controls the monitor 20 to display the generated edited image data through the screen display control unit 109 (step S11).

Furthermore, during the editing operation of the content data, the system control unit 110 edits the content data based on the command of a user, which is inputted to the operation input control unit 106, sequentially generates the edited image data that shows the content of the editing operation of the content data in the edited image control unit 108 in accordance with the status of the editing operation, and displays the generated edited image data on the monitor 20 through the screen display control unit 109.

In addition, at this time, the edited image control unit 108 stores the edited image data at the initial stage of the editing operation in the memory therein.

Next, when the editing of the content data is completed by the user and when a signal indicating that the editing content of the content data is determined is inputted to the operation input control unit 106, the operation input control unit 106 outputs the status to the system control unit 110 (step S12).

Furthermore, at this time, when the operation input control unit 106 does not detect the command input of the editing operation for a fixed period of time after the final operation of the editing operation is inputted, the operation input control unit 106 outputs the status that the command input is not detected to the system control unit 110, and the system control unit 110 makes the edited image control unit 108 abandon the image data generated in advance and stops the operation.

Next, when the status that the edited content is determined is inputted to the system control unit 110, the system control unit 110 makes the edited image control unit 108 output the edited image data stored in the edited image control unit 108 to the video-recording control unit 103 (step S13).

For example, the system control unit 110 outputs the image data illustrated in FIG. 3 from the edited image control unit 108 to the video-recording control unit 103 and, by controlling the operation input control unit 106, outputs the audio data related to the operation sound during the editing of the content data to the video-recording control unit 103.

Furthermore, when the content data is edited in real time or when a plurality of editing operations are performed, the system control unit 110 outputs the image data and the audio data at the initial stage of the editing operation or the image data and the audio data that represent the initial editing content to the video-recording control unit 103.

Next, the system control unit 110 outputs the content data, whose edited content is determined, to the video-recording control unit 103 and generates the editing start time and the editing finish time of the content data, whose edited content is determined, and the editing history information of the edited content in the video-recording control unit 103 (step S14).

To be specific, as described above, the system control unit 110 outputs the editing start time and the editing finish time generated by the timer therein to the video-recording control unit 103.

Next, the video-recording control unit 103 outputs the program stream of the content data, whose edited content is determined, to the HD 10 and outputs the generated editing history information to the HD 10 (step S15).

Finally, when the program stream and the editing history information of the content data, whose editing content is determined, are inputted to the HDD 105, the HDD 105 stores the input program stream and editing history information in the HD 10 to be related to each other (step S16) and completes the operation.

The editing system 100 according to the present embodiment includes the system control unit 110 for editing the content data that includes at least one of the audio data and the image data, the monitor 20 and the speaker 107 for notifying the content of the editing operation of the content data to a user when the content data is edited, and the HD 10 for storing the edited content data in association with notification data used when the content of the editing operation of the content data is notified to the user by the monitor 20 and the speaker 107.

According to the present embodiment, since the notification data, such as the image data and the audio data that represent the edited content, can be stored in the HD 10 together with the edited content data, when a user reads out the previously edited content data from the HD 10, the user can read out the edited image data stored in relation to the content data and output the edited image data to the monitor 20 through the screen display control unit 109.

In addition, at this time, the reproduction control unit 104 can read out the audio data stored in relation to the content data, perform a predetermined process on the audio data, and output the audio data from the monitor speaker.

Thus, since the editing system 100 according to the present embodiment can visually or aurally confirm the edited content during the editing operation, it is possible to reduce or mitigate mistakes in the editing operation and to effectively perform the editing operation.

In addition, when editing items that represent the content of a plurality of editing operations, such as the deletion, the insertion of chapters or the manipulation of data, are continuously executed, in the editing system 100 according to the present embodiment, the notification data related to at least one editing item among the plurality of the editing items is stored in the HD 10 in relation to the content data.

In this configuration, according to the present embodiment, since it is possible to reduce the amount of the stored edited image data that represents the edited content, it is possible to effectively use the HD 10.

In addition, the editing system 100 according to the present embodiment includes the operation input control unit 106, which is used for the editing operation, for detecting the command for the input editing operation during the edition of the content data whenever the command for the editing operation is inputted, and the system control unit 110 controls whether to store the notification data related to the editing operation in the HD 10 based on the detection of the command input for the editing operation performed by the operation input control unit 106 during at least one editing operation.

With this configuration, according to the present embodiment, in the case in which the input of the command for the editing operation cannot be detected within a fixed period of time after the final operation is inputted, the notification data related to the editing items that have already been edited is not stored in the HD 10. Thus it is possible to reduce the amount of the stored edited image data that represents the edited content without carelessly storing the edited data.

In addition, when notification by the monitor 20 is performed by an image, the editing system 100 according to the present embodiment includes the edited image control unit 108 for generating the image data that represents the content of the editing operation. The monitor 20 performs notification using the generated image data, and the generated image data is stored in the HD 10 as the notification data in relation to the content data.

With this configuration, according to the present embodiment, since the image data can be stored as the notification data, when a user reads out the content data edited in advance from the HD 10, the user can read out the edited image data stored in relation to the content data and output the edited image data to the monitor 20 through the screen display control unit 109.

Thus, since the editing system 100 according to the present embodiment can visually confirm the edited content during the editing operation, it is possible to reduce or mitigate mistakes in the editing operation and to effectively perform the editing operation.

In addition, when the notification by the speaker 107 is aurally performed, the edited system 100 according to the present embodiment includes the operation input control unit 106 for storing the audio data in advance that represents the content of the editing operation, and the audio data that represents the content of the editing operation by the system control unit 110 is stored in the HD 10 as the notification data in relation to the content data.

With this configuration, according to the present embodiment, since the audio data can be stored as the notification data, when a user reads out the previously edited content data from the HD 10, the user can read out the audio data stored in relation to the content data and output the audio data to the monitor speaker.

Thus, since the editing system 100 according to the present embodiment can aurally confirm the edited content during the editing operation, it is possible to reduce or mitigate mistakes in the editing operation and to effectively perform the editing operation.

In addition, in the editing system 100 according to the present invention, the history information related to the editing of the content data is stored in the HD 10 in relation to the content data and the notification data.

With this configuration, according to the present embodiment, when a user reads out the previously edited content data from the HD 10, the user can read out the history information that indicates the editing history and output the history information to the monitor speaker.

Thus, since the editing system 100 according to the present invention can visually or aurally confirm the edited content during the editing operation and also confirm the editing history of the edited content data, it is possible to reduce or mitigate mistakes in the editing operation and to effectively perform the editing operation.

Furthermore, according to the present embodiment, the video-recording control unit 103, the edited image control unit 108, and the system control unit 110 perform the recording operation for recording the edited content data in the HD 10 through the HDD 105. In addition, since a recording medium which records a program that defines the recording operation and a computer which reads out the program may be included, it is possible to perform the above-described recording operation by using the computer for reading in the program.

### [Second Embodiment]

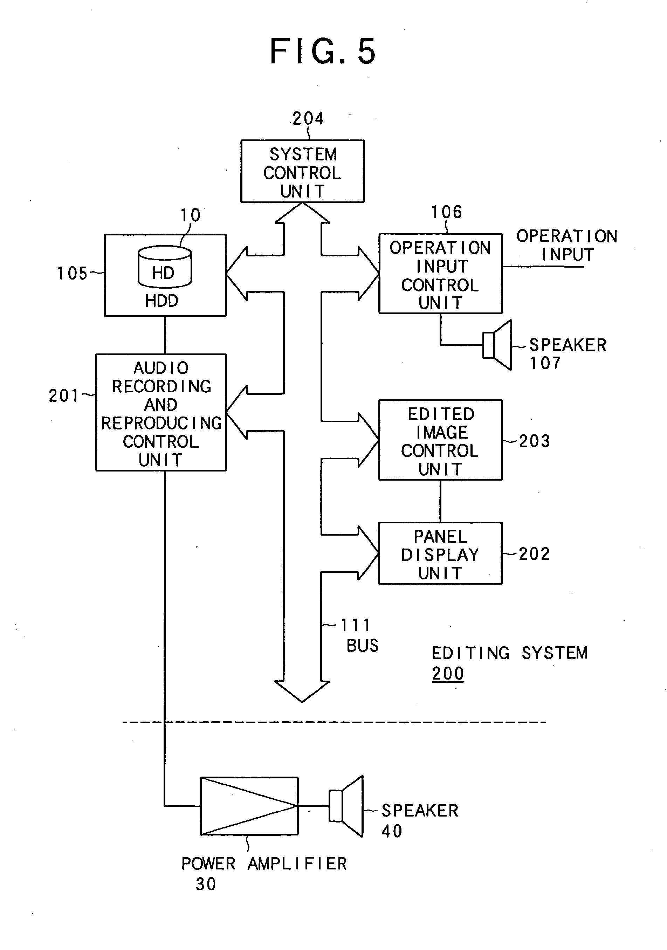

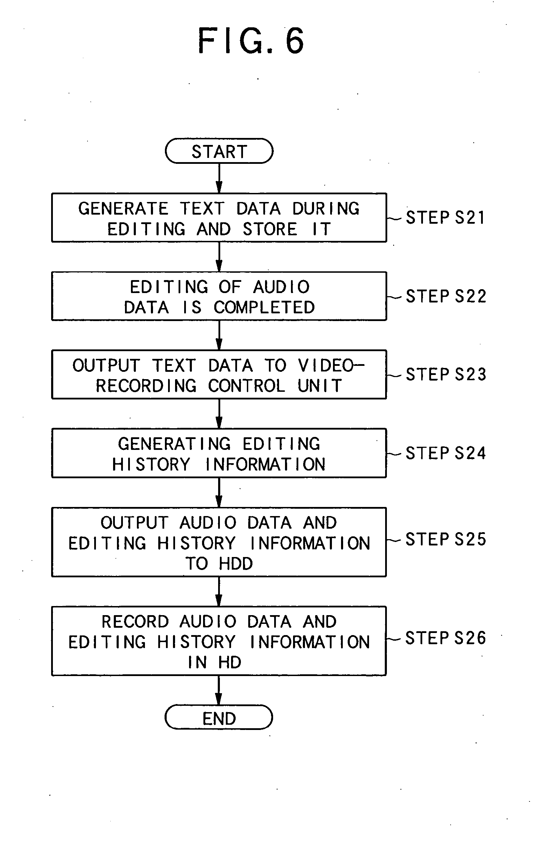

Next, a second embodiment of the editing system will be described using FIGS. 5 and 6.

Furthermore, an editing system according to the present embodiment is characterized in that the history information on the editing of the content data having the audio data is recorded instead of recording the history information on the editing of the content data having the image data and the audio data according to the first embodiment.

In addition, since the other characteristics of the present embodiment are the same as those in the first embodiment, the same members are denoted by the same reference numerals and the description of the members will be omitted.

First, the editing system according to the present embodiment will be described using FIG. 5.

Furthermore, FIG. 5 is a block diagram illustrating the system structure of the editing system according to the present embodiment.

As illustrated in FIG. 5, an editing system 200 according to the present embodiment includes an audio recording and reproducing control unit 201 for converting an input audio signal into audio data and recording the audio data in the hard disk (hereinafter, referred to as an HD) 10; the hard disk drive (hereinafter, referred to as an HDD) 105 that has the HD 10 for storing audio data, edited audio data, data on the edited audio data during editing and that controls the reading-out or the writing of the respective data items from or in the HD 10; the operation input control unit 106 for receiving an operation command related to the editing system 200 that is inputted through the operation unit or the remote controller, which is not shown; a speaker 107 for outputting an operation sound related to the editing operation of the content data outputted from the operation input control unit 106 when the content data is edited; a panel display unit 202 for displaying the operation content, such as reproduction, and the content of the audio data when the reproduction, the recording, and the editing of the audio data are performed; an edited image control unit 203 for generating a panel display screen required for editing when the audio data is edited; and a system control unit 204 for editing the audio data stored in the HD 10 and for controlling the respective units related to the editing system 200.

Also, for example, the audio recording and reproducing control unit 201 according to the present embodiment functions as storage control means according to the present invention, and the HD 10 constitutes storagemeans according to the present invention. In addition, for example, the operation input control unit 106 according to the present embodiment constitutes operation input means, detecting means, and storage means according to the present invention, and the edited image control unit 203 constitutes generating means according to the present invention. Furthermore, for example, the system control unit 204 according to the present embodiment constitutes editing means, control means, and notification control means according to the present invention.

An audio signal from the outside is inputted to the audio recording and reproducing control unit 201. Then, the audio recording and reproducing control unit 201 converts the inputted audio signal into a digital signal, converts the digitized audio signal to a predetermined format, and outputs the converted audio data to the HDD 105.

For example, according to the present embodiment, the audio recording and reproducing control unit 201 converts the digitized audio signal to an AC-3 (Audio Coding) format.

In addition, the audio recording and reproducing control unit 201 reads out the audio data in the AC-3 format as a monitor signal during the editing and the audio data stored in the HD 10 during the reproducing, and outputs the audio data from a speaker 40 through a power amplifier 30 connected to the outside.

On the other hand, when the audio data is edited, the audio data edited by the system control unit 204, text data of the panel display unit 202 outputted from the edited image control unit 203 as described later, and the audio data related to the operation outputted from the operation input control unit 106 are inputted to the audio recording and reproducing control unit 201, and as described above, the audio recording and reproducing control unit 201 converts the edited audio data to the AC-3 format and outputs the converted audio data to the HDD 105.

In addition, when the audio data is edited, the audio recording and reproducing control unit 201 generates history information on the editing operation based on the inputted text data and audio data, and outputs the editing history information to the HDD 105 together with the above-described audio data as in the first embodiment.

Furthermore, for example, the insertion and the deletion of a chapter that indicate the end of a series of audio data items and the deletion and the manipulation of the audio data are included in the edited contents related to the database, and file names of the text data and the audio data outputted from the edited image control unit 203 and the operation input control unit 106 are predetermined by the system control unit 204.

In addition, the recording process operation of the edited audio data including the editing history information will be described later in detail.

The HDD 105 records the audio data, the text data, the audio data that indicates the operation sound, and the editing history information related to the audio data to be recorded in the HD 10, and controls the reading-out or the writing of data from or to the HD 10.

Furthermore, according to the present embodiment, a database is constructed of the recorded audio data, text data, audio data, and editing history information.

To be specific, the audio data and other data generated by the audio recording and reproducing control unit 201 are inputted to the HDD 105, and the HDD 105 records the inputted audio data in the HD 10, reads out the previously recorded audio data from the HD 10, and outputs it to the audio recording and reproducing control unit 201.

In addition, when the edited audio data is inputted through the audio recording and reproducing control unit 201, the HDD 105 constructs the above-described database in a region predetermined in the HD 10 and stores the audio data and the editing history information in the region.

When the reproduction, audio recording, and editing of the audio data are performed, the panel display unit 202 mainly composed of a liquid crystal display (LCD) displays the text data that shows the operation content, such as reproduction, and the content of the audio data by the control of the panel display control unit, and generates a panel display screen required for editing during the editing of the audio data.

The edited image control unit 203 generates the text data that represents the edited content displayed on the panel display unit 202, and outputs the generated text data to the panel display unit 202 and the audio recording and reproducing control unit 201 during the editing of the audio data, which is performed based on the command of the operation input control unit 106.

For example, similarly as in the first embodiment, the edited image control unit 203 generates the text data required during the editing operation of the audio data as in the first embodiment, and outputs the generated text data to the panel display unit 202 and to the audio recording and reproducing control unit 201.

Furthermore, according to the present embodiment, in a manner similar to the first embodiment, the edited image control unit 203 outputs the editing screen to be outputted to the panel display unit 202 to the audio recording and reproducing control unit 201 during the editing of the audio data, in principle. However, when the audio data is edited in real time during the reproducing operation, such as the insertion of the chapter, or when a plurality of the editing operations are performed, the text data for a fixed period of time after the start of the editing operation or the text data for a fixed period of time after the completion of the editing operation is outputted to the audio recording and reproducing control unit 201.

In this case, when the fixed period of time has passed from the initial stage of the editing during the editing operation of the content data, the edited image control unit 203 stores the text data generated at that time in a memory therein, and outputs the stored text data to the audio recording and reproducing control unit 201 when the editing of the audio data is completed.

Furthermore, according to the present embodiment, the edited image control unit 203 may output the edited image data not only for the certain period after the start or the end of the editing operation, but, of course, for a fixed period from an arbitrary period of time during the editing operation to the audio recording and reproducing control unit 201, and may output any edited image data item of the edited image data that indicates a representative part of the editing items to the audio recording and reproducing control unit 201.

In a manner similar to the first embodiment, when the status that the command input of the operation unit (not shown) is not detected by the operation input control unit 106 for a fixedperiod of time is inputted during the editing operation, the edited image control unit 203 does not generate the edited image data of the image data of the editing operation or abandons the previously generated image data such that the edited image control unit 203 stops storing the image data related to the editing operation in the HD 10.

In a manner similar to the first embodiment, the system control unit 204 mainly composed of a central processing unit (CPU) controls an overall function related to the editing operation of the audio data based on the command of a user, which is inputted through the operation input control unit 106.

Next, the recording process operation of the audio data, edited by the system control unit according to the present embodiment, will be described with reference to FIG. 6.

Furthermore, FIG. 6 is a flow chart illustrating the recording process operation of the edited audio data.

In addition, according to the operation, when the audio data is stored in the HD 10 in advance and also the editing operation of the audio data, such as the addition of chapters, is performed in advance, and when a plurality of editing items are performed, the text data at the initial stage of the editing operation or of the representative part of editing items is stored in the HD 10.

First, the system control unit 204 generates the text data that shows the content of the editing operation of the audio data by the edited image control unit 108 during the editing operation of the audio data and displays the generated text data on the panel display unit 202 (step S21).

Furthermore, the system control unit 204 edits the audio data based on the command of a user, which is inputted to the operation input control unit 106 during the editing operation of the audio data, sequentially generates the text data that shows the content of the editing operation of the audio data in the edited image control unit 203 in accordance with the status of the editing operation, and allows the generated text data to be displayed on the panel display unit.

In addition, at this time, the edited image control unit 203 stores the text data at the initial stage of the editing operation in a memory therein.

Next, after the editing of the content data is completed by the user, when a signal indicating the status that the editing content of the content data is determined is inputted to the operation input control unit 106, the operation input control unit 106 outputs the status to the system control unit 204 (step S22).

Furthermore, at this time, when the operation input control unit 106 does not detect the command input for the editing operation for a fixed period of time after the final operation is inputted, the operation input control unit 106 outputs the status that the command input is not detected by the system control unit 204, and the system control unit 204 abandons the image data generated in advance by the edited image control unit 203 and stops the operation.

Next, when the status that the edited content is determined is inputted to the system control unit 204, the system control unit 204 makes the edited image control unit 203 generate the text data, and outputs the text data displayed on the panel display unit 202 from the edited image control unit 203 to the audio recording and reproducing control unit 201 (step S23).

In addition, at this time, in a manner similar to the first embodiment, the system control unit 204 controls the operation input control unit 106 to output the audio data related to the operation sound during the editing of the audio data to the video-recording control unit.

Furthermore, in a manner similar to the first embodiment, when the content data is edited in real time or when a plurality of editing operations are performed, the system control unit 204 outputs the text data and the audio data at the initial stage of the editing operation or the text data and the audio data that represent the initial editing content to the audio recording and reproducing control unit 201.

Next, the system control unit 204 outputs the audio data, whose edited content is determined, to the audio recording and reproducing control unit 201, and controls the audio recording and reproducing control unit 201 to generate the editing start time and the editing finish time of the audio data, whose edited content is determined, and the editing history information of the edited content (step S24).

To be specific, in a manner similar to the first embodiment, as for the editing start time and the editing finish time, the system control unit 204 outputs the editing start time and the editing finish time generated by the internal timer therein to the video-recording control unit 103. Also, the system control unit 204 gives a predetermined file name to the file name of the content data edited by the user and outputs the file name to the video-recording control unit.

Next, the audio recording and reproducing control unit 201, after converting the audio data, whose edited content is determined, to a predetermined AC-3 format, outputs the audio data to the HD 10, and also outputs the generated editing history information to the HD 10 (step S25).

Finally, when the audio data in the AC-3 format and the editing history information are inputted to the HDD 105, the HDD 105 records the input audio data and the editing history information, which are correlated with each other, in the HD 10 (step S26) and completes the operation.

As described above, the editing system 200 according to the present embodiment includes the system control unit 204 for editing the audio data, the panel display unit 202 and the speaker 107 for notifying the content of the editing operation of the audio data to the user, and the HD 10 for storing notification data used when the content of the editing operation of the audio data is notified to the user by the panel display unit 202 and the speaker 107.

With this configuration, according to the present embodiment, since the notification data, such as the text data and the audio data that represent the edited content, can be stored in the HD 10 together with the edited audio data, when the user reads out the previously edited audio data from the HD 10, the user can read out the text data stored in relation to the audio data and output the text data to the panel display unit 202.

In addition, at this time, the audio recording and reproducing control unit 201 reads out the audio data stored in relation to the content data, and after performing a predetermined process on the audio data, outputs the audio data from the speaker 107.

Thus, the editing system 200 according to the present embodiment can visually or aurally confirm the edited content during the editing operation, and thus it is possible to reduce or mitigate mistakes in the editing operation and to effectively perform the editing operation.

In addition, when editing items that represent the content of a plurality of editing operations, such as deletion, insertion of chapters, or manipulation of data, are continuously executed, in the editing system 200 according to the present embodiment, the notification data related to at least one editing item among the plurality of the editing items is stored in the HD 10 in relation to the edited audio data.

With this configuration, according to the present embodiment, since the amount of the stored text data that represents the edited content can be reduced, it is possible to effectively use the HD 10.

In addition, the editing system 200 according to the present embodiment includes the operation input control unit 106 that is used for the editing operation and for detecting the command for the input editing operation during the edition of the content data when the command for the editing operation is inputted, and the system control unit 204 controls whether to store the notification data related to the editing operation in the HD 10 based on the detection of the input of the command for the editing operation performed by the operation input control unit 106 during at least one editing operation.

With this configuration, according to the present embodiment, when the input of the command for the editing operation cannot be detected for the fixed period of time after the final operation is inputted, and if the notification data related to the editing item edited previously can be arranged not to be stored in the HD 10, it is possible to reduce the amount of the stored edited image data that indicates the edited content without carelessly storing the edited data.

In addition, when notification by the panel display unit 202 is performed by an image, the editing system 200 according to the present embodiment includes the edited image control unit 203 for generating the text data that shows the content of the editing operation, so that the panel display unit 202 performs the notification using the generated text data, and that the generated text data is stored in the HD 10 as the notification data in relation to the audio data.

With this configuration, according to the present embodiment, the text data can be stored as the notification data. When a user reads out the previously edited audio data from the HD 10, the user can read out the text data stored in relation to the audio data and output the text data to the panel display unit 202.

Thus, the editing system 200 according to the present embodiment can visually confirm the edited content during the editing operation. Therefore, it is possible to reduce or mitigate mistakes in the editing operation and to effectively perform the editing operation.

In addition, when notification by the speaker 107 is performed by a sound, the editing system 200 according to the present embodiment includes the operation input control unit 106 for storing the audio data in advance that shows the content of the editing operation, and the audio data that shows the content of the editing operation by the system control unit 204 can be stored in the HD 10 as the notification data in relation to the audio data.

With this configuration, according to the present embodiment, the audio data can be stored as the notification data. Therefore, when a user reads out the previously edited audio data from the HD 10, the user can read out the audio data stored in relation to the audio data and output the audio data to the speaker 107.

Thus, the editing system 200 according to the present embodiment can aurally confirm the edited content during the editing operation. Therefore, it is possible to reduce or mitigate mistakes in the editing operation and to effectively perform the editing operation.

In addition, in the editing system 200 according to the present invention, the history information related to the editing of the audio data can be stored in the HD 10 in relation to the audio data and the notification data.

With this configuration, according to the present embodiment, when a user reads out the previously edited audio data from the HD10, the user can read out the history information that indicates the editing history and output the history information to the speaker 107.

Thus, the editing system 200 according to the present invention can visually or aurally confirm the edited contents during the editing operation, and also confirm the editing history of the edited audio data. Therefore, it is possible to reduce or mitigate mistakes in the editing operation and to effectively perform the editing operation.

Furthermore, according to the present embodiment, the text data displayed on the panel display unit is recorded in the HD 10 as the recording data together with the edited content data. However, apart of operation buttons (not shown) related to the editing operation may be shined.

In this case, a part of the respective operation buttons may be arranged to shine, and control data capable of making the operation buttons shine may be stored instead of the text data, so that, when a user looks and listens to the edited content data, the system control unit 204 makes the operation unit shine based on the control data.

Furthermore, according to the present embodiment, the video-recording control unit, the edited image control unit 203, and the system control unit 204 perform the recording process operation of recording the edited content data in the HD 10 through the HDD 105. However, a recording medium in which a program defining the recording operation is recorded and a computer for reading out the program may be included in the present invention, so that the computer reads out the program to perform the above-described recording process operation.

It should be understood that various alternatives to the embodiment of the invention described herein may be employed in practicing the invention. Thus, it is intended that the following claims define the scope of the invention and that methods and structures within the scope of these claims and their equivalents be covered thereby.

## Claims

1. A data editing and recording apparatus (100,200), **characterized in that** the data editing apparatus comprises:
an editing device (110,204) which edits a content data having at least one of an audio data and an image data;
a notifying device(107,109,202) which notifies the content of an editing operation for the content data to a user when the content data is edited; and
a storage device (10) in which the edited content data and a notification data used when the content of the editing operation is notified to a user by the notifying device are stored so as to be related to each other.

2. The data editing and recording apparatus according to claim 1,
wherein, when editing items that represent the content ofapluralityofeditingoperationsarecontinuouslyexecuted, the notification data related to at least one of the plurality of the editing items is stored in the storage device(10) in relation to the edited content data.

3. The data editing and recording apparatus according to claim 1, further comprises:
an operation input(106) device which is used for the editing operation and to which a command of the editing operation is inputted;
a detecting device (110,204) which detects the command for the editing operation inputted to the operation input device, during the editing of the content data by the editing device; and
a control device (110,204) which controls whether the notification data related to the editing operation is stored in the storage device, based on the input of the command for the editing operation detected by the detecting device, during at least one editing operation.

4. The data editing and recording apparatus according to claim 1, further comprises:
a generating device (108,203) which generates an image data that represents the content of the editing operation when the notifying device gives a notification using an image,
wherein the notifying device gives the notification using the generated image data, and the generated image data is stored in the storage device (10) as the notification data in relation to the content data.

5. The data editing and recording apparatus according to claim 1, further comprises:
a storage device (10) which stores the audio data in advance that represents the content of the editing operation when the notifying device gives a notification using a sound,
wherein the audio data that represents the content of the editing operation by the editing device is stored in the storage device as the notification data in relation to the content data.

6. The data editing and recording apparatus according to claim 1,
wherein history information related to the editing of the content data is stored in the storage device (10) in relation to the content data and the notification data.

7. The data editing and recording apparatus according to claim 6,
wherein at least one of the editing start time that indicates the start time of the editing, the editing finish time that indicates the finish time of the editing, or editing items is stored in the storage device as the history information.

8. A data editing and recording method in which, when the content data having at least one of the audio data or the image data is edited, the edited content data is stored in storage device, **characterized in that** the editing and recording method comprises:
a notifying process of notifying a user of the content of the editing operation for the content data during the editing operation of the content data; and
a storing process of storing, after the editing operation of the content data is completed, the edited content data and notification data used for performing the notification in the storage device so as to be related to each other.

9. A computer-readable information recording medium on which the data editing and recording program is recorded in a readable way by a computer included in a data editing and recording apparatus,characterizedin that theinformation recording medium comprises the editing and recording program causing the computer to function as:
an editing device which edits the content data;
a notification control device which allows the notifying device to notify a user of the content of the editing operation for the content data when the content data is edited; and
a storage control device which stores the edited content data and the notification data used when the content of the editing operation is notified to a user by the notifying means in the storage means so as to be related to each other.
